(19) Europäisches Patentamt / European Patent Office / Office européen des brevets

(11) **EP 4 753 257 A1**

(12) **EUROPEAN PATENT APPLICATION**

(43) Date of publication:
03.06.2026 Bulletin 2026/23

(21) Application number: 24306978.8

(22) Date of filing: 27.11.2024

(51) International Patent Classification (IPC):
*H04N 19/124* (2014.01)   *H04N 19/70* (2014.01)
*H04N 19/18* (2014.01)

(52) Cooperative Patent Classification (CPC):
**H04N 19/124; H04N 19/18; H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: InterDigital CE Patent Holdings, SAS
75017 Paris (FR)

(72) Inventors:
• **LE PENDU, Mikael**
**35700 RENNES (FR)**
• **URBAN, Fabrice**
**35235 THORIGNE-FOUILLARD (FR)**
• **FRANCOIS, Edouard**
**35890 BOURG DES COMPTES (FR)**

(74) Representative: **Interdigital**
**Immeuble ZEN 2**
**845 A, avenue des Champs Blancs**
**35510 Cesson-Sévigné (FR)**

(54) **QUANTIZATION CONSTRAINED CORRECTION WITH INDIVIDUALLY ENABLED BOUND OFFSETS**

(57) Methods and apparatus are provided for performing the quantization constrained (QC) correction of a given transform coefficient $c_f$ associated to a quantization level $c_q$ when the minimum and maximum bound offsets are individually enabled or disabled. In one embodiment, signaling methods are provided to save signaling cost of bound offset parameters if the corresponding bound offset is disabled. Another embodiment provides performing QC correction of a transform coefficient using individually enabled or disabled bound offsets. In another embodiment, computing both the minimum and the maximum bound offsets is performed using a single bound offset signaled in the bitstream.

- Transform coefficient cf
- Quantization level cq
- Bound offset parameters (e.g., $O_0$, $S_0$, $O_1$, $S_1$)
- Flag indicating if minimum bound offset is enabled: min_enabled
- Flag indicating if minimum bound offset is enabled: max_enabled

start

Based on min_enabled, max_enabled and $c_q$ determine if inferior and superior correction bounds $b_{inf}$ and $b_{sup}$ respectively are enabled

Inferior bound enabled? — yes → Compute $b_{inf}$ using $c_q$ and the parameters of the enabled bound offset

Superior bound enabled? — yes → Compute $b_{sup}$ using $c_q$ and the parameters of the enabled bound offset

no / no

Both bounds disabled? — yes → Skip correction of the coefficient

no

Select correction function depending on which correction bound(s) is/are enabled and correct the transform coefficient $c_f$ using the selected function and the enabled correction bound(s)

end

Figure 9

**Description**

TECHNICAL FIELD

At least one of the present embodiments generally relates to a method or an apparatus for bound offset signaling with adaptive bitdepth for quantization constrained correction.

BACKGROUND

The general aspects described herein relate to approaches for video compression and decompression, and particularly to for bound offset signaling with adaptive bitdepth for quantization constrained correction.

SUMMARY

At least one of the present embodiments generally relates to a method or an apparatus for compressing or decompressing a set of images or videos using bound offset signaling with adaptive bitdepth for quantization constrained correction.

According to a first aspect, there is provided a method. The method comprises steps for parsing a bitstream for enabled bound offsets; selecting a correction function based on at least one enabled bound offset; applying the correction function to a prediction residual transform coefficient; and, decoding video data using the prediction residual transform coefficient after correction.

According to a second aspect, there is provided another method. The method comprises steps for determining a correction function to be used for quantization constrained correction of a video block based on at least one enabled bound offset; and, signaling in a bitstream at least one bound offset corresponding to the quantization constrained correction for encoding the video block.

According to another aspect, there is provided an apparatus. The apparatus comprises a processor and a memory. The processor can be configured to operate on video signals and data according to the aforementioned methods.

According to another aspect, there is provided an apparatus. The apparatus comprises a processor and a memory. The processor can be configured to encode a video signal or decode video data by executing any of the aforementioned methods.

According to another general aspect of at least one embodiment, there is provided a device comprising an apparatus according to any of the decoding embodiments; and at least one of (i) an antenna configured to receive a signal, the signal including the video signal, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

BRIEF DESCRIPTION OF THE DRAWINGS

Figure 1 illustrates quantization and dequantization of a transform coefficient c.
Figure 2 illustrates quantization bounds depending on the sign of the quantization level.
Figure 3 illustrates reconstruction with filtering.
Figure 4 illustrates quantization constrained correction.
Figure 5 illustrates projection function onto the quantization constraint.
Figure 6 illustrates an example of smooth correction function.
Figure 7 illustrates correction of a transform coefficient $c_f$ associated with a quantization level $c_q$.

Figure 8 illustrates correction of a transform coefficient $c_f$ associated with a quantization level $c_q$ using the symmetrized coefficient $c_f^{sym}$ associated with $abs(c_q)$.

Figure 9 illustrates QC correction with adaptive correction function based on the availability of bound offsets and the quantization level.

Figure 10 illustrates correction functions with clipping.

Figure 11 illustrates example of correction functions with smooth clipping.

Figure 12 illustrates bounds that depend on the minimum bound offset.

Figure 13 illustrates bounds that depend on the maximum bound offset.

Figure 14 illustrates determination of enabling flags for inferior and superior correction bounds.

Figure 15 illustrates determination of enabling flags for inferior and superior correction bounds when QC correction is applied to a symmetrized transform coefficient $\overline{c_f^{sym}}$ .

Figure 16 illustrates selection of inferior or superior correction bound by disabling the non-selected correction bound.

Figure 17 illustrates decoding with signaling.

Figure 18 illustrates one embodiment of a first method under the described aspects.

Figure 19 illustrates one embodiment of a second method under the described aspects

Figure 20 illustrates one embodiment of an apparatus under the described aspects.

Figure 21 illustrates a standard, generic, video compression scheme.

Figure 22 illustrates a standard, generic, video decompression scheme.

Figure 23 illustrates a processor-based system for encoding/decoding under the general described aspects.

## DETAILED DESCRIPTION

The embodiments described here are in the field of video compression, specifically focusing on in-loop or out-of-loop filters and is also related to quantization. In-loop filters are used to enhance reconstructed images before storing them in the reference buffer. In-loop filters form a whole family. Among them, deblocking filters (DBF) aim at reducing blocking artifacts occurring along block boundaries. Deblocking filters are usually designed to improve subjective quality, that is, the noticeability by the human visual system of such coding errors. In usual video coding standards such as HEVC and WC, deblocking filters are predetermined based on coding information (such as prediction modes, motion vectors, transform coefficients) and on local variations across block boundaries. On the other hand, adaptive loop filters (ALF) are learnt at encoder side in order to minimize the mean squared error with respect to source images, then the learned filter weights are written to the bitstream. Adaptive loop filters are applied at CTU-level, while deblocking filters are run along block borders.

The present embodiments propose computing the QC correction when the minimum and maximum bound offsets used in the correction process may be individually enabled or disabled.

To achieve high compression efficiency, image and video coding schemes usually employ block-based prediction, including motion vector prediction, and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

In the HEVC (High Efficiency Video Coding) video compression standard, motion compensated temporal prediction is employed to exploit the redundancy that exists between successive pictures of a video.

The embodiments described herein are in the context of video compression. The embodiments specifically focus on in-loop or out-of-loop filters and is also related to quantization.

In-loop filters are used to enhance reconstructed images before storing them in the reference buffer. In-loop filters form a whole family. Among them, deblocking filters (DBF) aim at reducing blocking artifacts occurring along block boundaries. Deblocking filters are usually designed to improve subjective quality, that is, the noticeability by the human visual system of such coding errors. In usual video coding standards such as HEVC and WC, deblocking filters are predetermined based on coding information (such as prediction modes, motion vectors, transform coefficients) and on local variations across block boundaries. On the other hand, adaptive loop filters (ALF) are learnt at encoder side in order to minimize the mean squared error with respect to source images, then the learned filter weights are written to the bitstream. Adaptive loop filters are applied at CTU-level, while deblocking filters are applied along block borders.

In another work, the quantization-constrained (QC) correction filter adds a complementary step to existing filters with the goal to prevent these filters from losing information carried by the quantized transform coefficients signaled in the bitstream, while still preserving the filtering effect.

**Scalar quantization in High Efficiency Video Coding (HEVC)**

HEVC and WC standards specify conventional independent scalar quantization with Uniform Reconstruction Quantizers (URQs). The reconstructed transform coefficients $c_r$ of URQs are completely denoted by integer multiples of a quantization step size $\Delta$ (a.k.a. quantization step) which depends on a quantization parameter (QP). This integer specifies the associated transform coefficient level, which is transmitted in the bitstream as quantization levels $c_q$. On the decoder side, given a quantization level $c_q$ and a quantization step size $\Delta$, a reconstructed transform coefficient $c_r$ may be generated as follows :

$$c_r = Q^{-1}(c_q) = c_q \times \Delta \qquad\qquad (1)$$

On the encoder side, given a coefficient $c$ (a.k.a a transform coefficient or more precisely a prediction residual transform coefficient) and a quantization step size $\Delta$, a quantization level $c_q$ may be generated as follows:

$$c_q = Q(c) = \lfloor abs(c) / \Delta + a \rfloor \times sgn(c), \qquad\qquad (2)$$

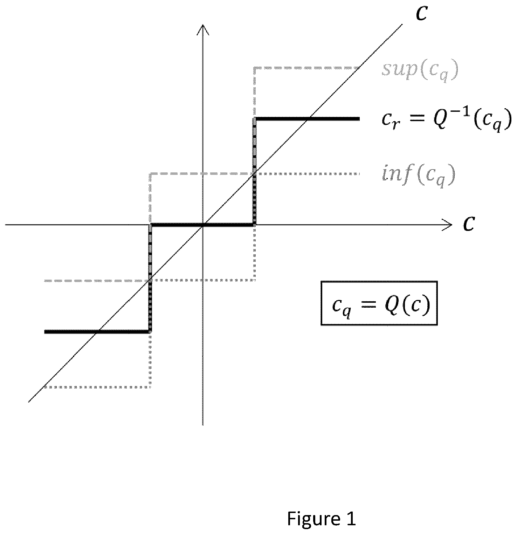

where $\lfloor . \rfloor$ is the floor operation (i.e. rounding to the lower integer), *abs* is the absolute value, *sgn* is the sign function (i.e. returns 1 if c>0, -1 if c<0 and 0 if c=0), and $a$ is a parameter such that 0<a<1. With this quantization method, every quantization level $c_q$ is associated to quantization bounds $inf_Q(c_q)$ and $sup_Q(c_q)$ such that an original coefficient c between $inf_Q(c_q)$ and $sup_Q(c_q)$ is quantized to $c_q$. Hence assuming this quantization method was used by the encoder and given a quantization level $c_q$, the original coefficient c associated with $c_q$ is known to be between $inf_Q(c_q)$ and $sup_Q(c_q)$, as illustrated in Figure 1. In the case of uniform quantization with quantization step size $\Delta$ and parameter $a$, the inferior and superior quantization bounds are defined as follows:

$$inf_Q(c_q) = \begin{cases} (c_q - o_{max}) \times \Delta & if \ c_q \leq 0 \\ (c_q + o_{min}) \times \Delta & if \ c_q > 0 \end{cases}, \qquad\qquad (3)$$

$$sup_Q(c_q) = \begin{cases} (c_q - o_{min}) \times \Delta & if \ c_q < 0 \\ (c_q + o_{max}) \times \Delta & if \ c_q \geq 0 \end{cases}, \qquad\qquad (4)$$

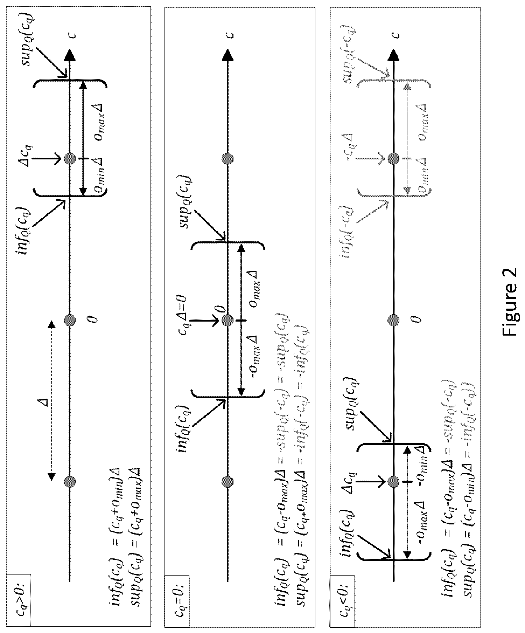

with minimum offset $o_{min}$ and maximum offset $o_{max}$ defined as $o_{min} = -a$ and $o_{max} = 1 - a$. This parameterization of the quantization bounds, and reconstruction values is illustrated in Figure 2 for the three cases where $c_q > 0$, $c_q = 0$ or $c_q < 0$. It can be
noted that from the definition in Equations 3 and 4, a symmetry property of the quantization bounds is always satisfied: i.e., $inf_Q(c_q) = - sup_Q(-c_q)$ and $sup_Q(c_q) = - inf_Q(-c_q)$..

The encoder may use alternative strategies to select the quantization levels $c_q$. For example, rate distortion optimized quantization (RDOQ) optimizes the quantization levels accounting not only for the distortion (i.e., MSE), but also for the rate. In this case, it is no longer guaranteed that the original coefficients c are between the bounds $inf_Q(c_q)$ and $sup_Q(c_q)$.

In the quantization constrained correction, c is assumed to be bounded by $inf_Q(c_q)$ and $sup_Q(c_q)$, where $inf_Q(c_q)$ and $sup_Q(c_q)$ can be determined on the decoder side knowing the quantization level $c_q$, the scalar quantizer Q (a.k.a. scalar quantization operation) and its quantization parameter (QP). If the encoder uses quantization strategies that may break this assumption, such as RDOQ, the method remains applicable.

**Quantization constrained correction filter**

In the quantization-constrained correction filter, a quantization constraint is defined as the following equation:

$$Q(c_x) = c_q, \qquad\qquad (5)$$

where Q is a scalar quantization operation (a.k.a. scalar quantizer), $c_q$ is the quantization level of a prediction residual transform coefficient c, and $c_x$ is a reconstructed value of the corresponding transform coefficient c. When no in-loop or out-of-loop filter is applied to a reconstructed picture, each coefficient $c_x$ is obtained as $c_x = c_r$. Since $c_r = Q^{-1}(c_q)$, its value is between the quantization bounds $inf(c_q)$ and $sup(c_q)$ (see Figure 1). Therefore, in this case, the quantization constraint $Q(c_r) = c_q$ is satisfied. Assuming that each quantization level was determined by the encoder as $c_q = Q(c)$, where c is the original (unquantized) coefficient, then $Q(c_r) = Q(c)$, which is a necessary condition to reconstruct the original coefficient c without error. More generally, the absolute error $|c_r - c|$ between a reconstructed coefficient and the corresponding original coefficient is such that $0 \leq |c_r - c| < sup_Q(c_q) - inf_Q(c_q)$.

However, in the case of filtering the reconstructed picture (e.g., with DBF, SAO, ALF, etc.), each coefficient $c_x$ is defined as $c_x = c_f$ where $c_f$ is the corresponding prediction residual transform coefficient of said reconstructed and filtered picture ($c_f$ may not be computed explicitly in video coding). In this case, $c_x$ might not satisfy the above quantization constraint anymore, resulting in a loss of information. For example, the DBF filter improves the subjective quality by removing block discontinuities, but it may also remove some details in the filtered area at the borders of the blocks. As a result, for some coefficients, we may have $c_f > sup_Q(c_q)$ or $c_f < inf_Q(c_q)$, and thus $Q(c_f) \neq c_q$. Said otherwise, the quantization constraint is not necessarily satisfied. This results in a sub-optimal MSE of the filtered picture since the corresponding original coefficient c is expected to be in the range $[inf_Q(c_q), sup_Q(c_q)]$. Thus, $c_f$ is necessarily different from the original coefficient $c$ (i.e. $|c_f - c| > 0$), and the error $|c_f - c|$ is not bounded by $sup_Q(c_q) - inf_Q(c_q)$. Although the ALF filter is designed to reduce the MSE between the original and the reconstructed and filtered picture, it does not guarantee that the quantization constraint $Q(c_f) = c_q$ is satisfied for every coefficient $c_f$, hence potentially leading to sub-optimal MSE given that the quantization levels $c_q$ are known to both the encoder and the decoder.

The QC correction filter solves this problem by enforcing the quantization constraint on the prediction residual transform coefficients of the filtered picture.

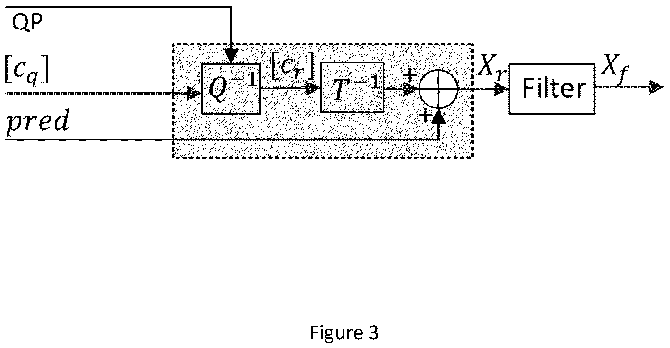

The QC correction is applied to an image block $X_f$ obtained by filtering a block $X_r$ previously obtained using conventional reconstruction steps in video coding, as shown in Figure 3. These steps include:

1) Scalar dequantization of quantization levels $c_q$ to produce reconstructed coefficients $c_r = Q^{-1}(c_q)$, where the dequantization function $Q^{-1}$ is parameterized by a quantization parameter QP and where each quantization level $c_q$ is assigned to a position within the block.
2) Inverse transform $T^{-1}$ applied to the coefficients $c_r$, in order to obtain a prediction residual block.
3) Reconstruction of the block $X_r$ as the sum between the prediction residual block and a prediction block *pred.*

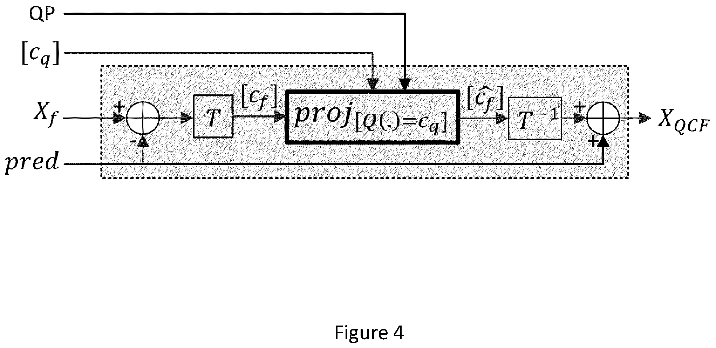

After filtering $X_r$ to produce $X_f$, the QC correction described in Figure 4 first converts $X_f$ back to prediction residuals and compute its transform coefficients $c_f$ in order to correct the values of these coefficients using a correction step that ensures that the quantization constraint $Q(\widehat{c_f}) = c_q$ is satisfied for the corrected transform coefficient $\widehat{c_f}$. The corrected transform coefficients are then converted back to obtain the corrected image block $X_{QCF}$ using the inverse transform $T^{-1}$ and the summation with the prediction *pred.* The steps of the QC correction are further detailed hereafter:

Prediction subtraction:

$X_f$ is converted back to prediction residuals. To this aim, the prediction block *pred* is subtracted from the filtered image block $X_f$ in order to obtain a filtered prediction residual block. The prediction *pred* is equal to the prediction used in the reconstruction stage. Therefore, the prediction block *pred* does not have to be computed again using the codec's prediction mechanisms. Instead, the prediction block may be stored in a buffer during the reconstruction and reused for the QC correction.

Forward Transform:

The filtered prediction residual block is then converted back to the transform domain using the forward transform $T$. In the case where several types of transforms or inverse transforms may be applied (e.g., DCT-II, DST-7, DCT-8), the QC correction uses the forward transform $T$ of the same type as the inverse transform $T^{-1}$ used during the reconstruction stage. For example, if a block X is reconstructed using the inverse of the DCT-II at S802, its corresponding block (i.e. the block of coefficients $c_f$ obtained from X) in the QC correction is transformed with forward DCT-II. The forward transform thus produces a new block of prediction residual transform coefficients $c_f$, named more simply transform coefficients $c_f$, each located at a given position within the block. Each transform coefficient $c_f$ can thus be associated with the quantization level $c_q$ used during the reconstruction stage, and which is located at the same position within the block.

Projection to the quantization constraint:

Each transform coefficient $c_f$ of the block of prediction residual transform coefficients is corrected to obtain a block of corrected prediction residual transform coefficients $\widehat{c_f}$, named more simply corrected transform coefficient $\widehat{c_f}$. The corrected version is computed as $\widehat{c_f} = proj_{[Q(.)=c_q]}(c_f)$, where $proj_{[Q(.)=c_q]}$ is a correction function (also called projection function onto the quantization constraint). This correction function ensures that the constraint $Q(\widehat{c_f}) = c_q$ is satisfied, where $c_q$ is the quantization level associated with $c_f$, and where $Q$ is the scalar quantizer associated to the scalar dequantizer $Q^{-1}$ used in the reconstruction stage. The correction function can be defined as follows:

$$proj_{[Q(.)=c_q]}(c_f) = \min(\max(c_f, inf_Q(c_q)), sup_Q(c_q)) \qquad (6)$$

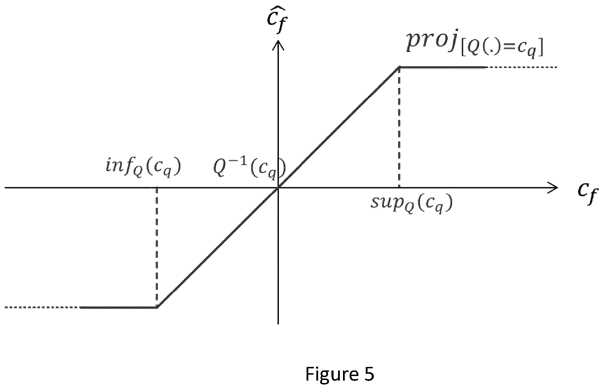

It is illustrated in Figure 5. With this definition, each corrected transform coefficient $\widehat{c_f}$ is always between the quantization bounds $inf_Q(c_q)$ and $sup_Q(c_q)$ of the quantization level $c_q$ for the quantizer $Q$. Hence $\widehat{c_f}$ satisfies $Q(\widehat{c_f}) = c_q$. However, if $c_f$ is already within the quantization bounds, no correction is applied (i.e. $\widehat{c_f} = c_f$), which preserves the filtering effect.

The correction function in Equation 6 is defined to enforce the quantization constraint while also minimizing the squared error $(\widehat{c_f} - c_f)^2$ between the corrected and the uncorrected transform coefficient. However, other functions may be used. For example, a more general clipping function can be defined as $\widehat{c_f} = \min(\max(c_f, b_{inf}) b_{sup})$ where the correction bounds $b_{inf}, b_{sup}$ may be computed similarly to $inf_Q(c_q)$ and $sup_Q(c_q)$ using Equations 3 and 4 respectively, but where the values of the parameters $o_{min}$ and $o_{max}$ are set independently of the parameter $a$. For example, $o_{min}$ and $o_{max}$ may be pre-determined parameters known to both the encoder and decoder. Note that using $o_{min}$ and $o_{max}$ such that $-a \leq o_{min} < o_{max} \leq 1 - a$ ensures that $inf_Q(c_q) \leq b_{inf} < b_{sup} \leq sup_Q(c_q)$. Hence, assuming that $c_q$ was computed with the quantization function in Equation 2 by the encoder, using such values of $o_{min}$ and $o_{max}$ still ensures that the quantization constraint $Q(\widehat{c_f}) = c_q$ is satisfied (since $inf_Q(c_q) < b_{inf} \leq \widehat{c_f} \leq b_{sup} < sup_Q(c_q)$). However, if other quantization methods are used by the encoder (e.g., RDOQ), the original coefficient may not be between the bounds $inf_Q(c_q)$ and $sup_Q(c_q)$ defined in Equations 3 and 4. Hence, in such cases, it may be advantageous to compute the correction bounds $b_{inf}$ and $b_{sup}$ using other values of $o_{min}$ and $o_{max}$ that do not necessarily satisfy the constraint $-a \leq o_{min} < o_{max} \leq 1 - a$.

In another example, a smooth version of the correction function $proj_{[Q(.)=c_q]}$ may be used such as:

$$\widehat{c_f} = s \cdot \tanh\left(\frac{c_f - t}{s}\right) + t, \qquad (7)$$

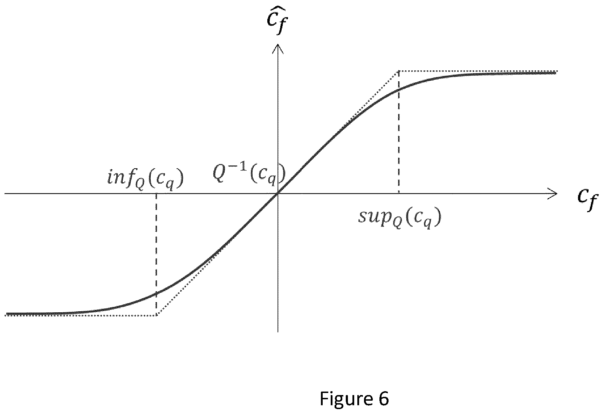

with a scale $s = \frac{sup_Q(c_q) - inf_Q(c_q)}{2}$ and a translation $t = \frac{sup_Q(c_q) + inf_Q(c_q)}{2}$. This smooth function is illustrated by Figure 6. Similarly to the previous example, the correction bounds $b_{inf}$ and $b_{sup}$ may be used instead of the inferior and superior bounds $inf_Q(c_q)$ and $sup_Q(c_q)$ respectively for the computation of the scale and translation parameters s and t.

Inverse Transform and addition with prediction:

After enforcing the quantization-constraint in the residual transform domain, the corrected transform coefficients $\widehat{c_f}$ are converted back to the image domain to obtain a final corrected image block $X_{QCF}$. This is performed by first applying the inverse transform again to obtain a block of corrected prediction residuals. The same inverse transform $T^{-1}$ is used as in the reconstruction stage. Finally, the prediction block *pred* is added back to the block of corrected prediction residuals to obtain a corrected image block $X_{QCF}$ which satisfies the quantization constraint.

**Integer bound offset parameterization for integer bound computation.**

For practical computation of the bounds using the bound offsets $o_{min}$ and $o_{max}$, an integer approximation of Equations 3 and 4 may be applied, based on an integer parameterization of the bound offsets of the form $o_{min} = \frac{o_0}{2^{s_0}}$

and $O_{max} = \dfrac{O_1}{2^{S_1}}$, where $O_0$ and $S_0$ are respectively the integer bound offset parameter and the integer shift parameter of the minimum bound offset, and $O_1$ and $S_1$ are respectively the integer bound offset parameter and the integer shift parameter of the maximum bound offset. Each integer bound offset parameter $O_i$ (with $i = 0$ or $i = 1$) is represented by $N_i$ bits and a starting value $start_i$, i.e., $O_i$ can take $2^{N_i}$ integer values in the range $[start_i, start_i + 2^{N_i} - 1]$. For example, the values of $S_i$ and $start_i$ may be fixed as $S_i = N_i - 1$ and $start_i = -2^{S_i}$ so that the corresponding bound offset has $2^{N_i}$ possible values uniformly spaced in the range $[-1,1[$. Alternatively, $S_i$ and $start_i$ may be fixed as $S_i = N_i - 1$ and $start_i = 1 - 2^{S_i}$ so that the corresponding bound offset has $2^{N_i}$ possible values uniformly spaced in the range $]-1,1]$.

In existing video coding standards such as HEVC and WC, the quantization step $\Delta$ is also represented with integer parameters $scale_\Delta$ and $shift_\Delta$ as $\Delta = scale_\Delta/2^{shift_\Delta}$ in order to perform dequantization with integer-based computations.

Based on these integer parameterizations, a correction bound $b(c_q)$ associated to a quantization level $c_q$ may be computed using only operations on integers: additions, multiplications and bitshifts (i.e. leftshift «, or rightshift »). For example, using an integer bound offset parameter 0, its corresponding shift $S$, and the quantization step parameters $scale_\Delta$ and $shift_\Delta$, a correction bound $b(c_q)$ may be computed as:

$$b(c_q) = \begin{cases} (num + add) \gg shift & if\ shift > 0 \\ num \ll -shift & if\ shift \leq 0 \end{cases} \quad (8)$$

where $num = ((c_q \ll S) + O) * scale_\Delta$, $shift = shift_\Delta + S$, and $add$ is a value determined depending on the rounding strategy.

For example, using $add = 1 \ll (shift - 1)$, Equation 8 approximates the result of the division $\dfrac{num}{2^{shift}}$ with the closest integer when $shift > 0$.

For each coefficient $c_f$ associated to a quantization level $c_q$, its inferior and superior correction bounds $b_{inf}$ and $b_{sup}$ may thus be computed with this method using values of $O$ and $S$ selected depending on the sign of $c_q$. For example, considering the integer parameterization of $o_{min}$ (with $O_0$ and $S_0$) and $o_{max}$ (with $O_1$ and $S_1$), the inferior bound in Equation 3 may be approximated by an inferior correction bound $b_{inf}$ computed with Equation 8 using $S = S_1$ and $O = -O_1$ if $c_q \leq 0$, or $S = S_0$ and $0 = O_0$ if $c_q > 0$. Similarly, the superior bound in Equation 4 may be approximated by a superior correction bound $b_{sup}$ computed with Equation 8 using $S = S_0$ and $0 = -O_0$ if $c_q < 0$ or $S = S_1$ and $0 = O_1$ if $c_q \geq 0$.

Using both correction bounds $b_{inf}$ and $b_{sup}$, a correction function is finally applied to the transform coefficient $c_f$ to obtain the corrected transform coefficient $\widehat{c_f}$.

### Correction of symmetrized coefficient

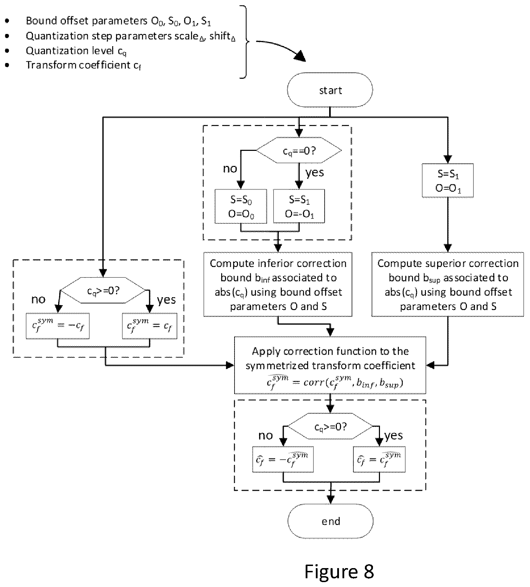

In a variant of the QC correction detailed in Figure 8, the correction of a coefficient $c_f$ associated with a quantization level $c_q$ is performed indirectly by exploiting the symmetry property of the quantization bounds illustrated in Figure 2 and by applying the correction to a symmetrized coefficient $c_f^{sym}$ associated with the absolute value $abs(c_q)$ of the quantization level. The symmetrized coefficient $c_f^{sym}$ is equal to $c_f$ if $c_q \geq 0$, or equal to $-c_f$ otherwise. The correction bounds of the symmetrized coefficient are then computed, and the correction function is applied to $c_f^{sym}$ to obtain a corrected symmetrized coefficient $\widehat{c_f^{sym}}$. Finally, the corrected coefficient $\widehat{c_f}$ is equal to $\widehat{c_f^{sym}}$ if $c_q \geq 0$ or equal to $-\widehat{c_f^{sym}}$ otherwise. In this variant, the inferior bound $b_{inf}$ of $c_f^{sym}$ may be computed with Equation 8 using $S = S_1$ and $O = -O_1$ if $c_q = 0$ or $S = S_0$ and $O = O_0$ otherwise, and by replacing the quantization level $c_q$ by its absolute value $abs(c_q)$ in the numerator (i.e., $num = ((abs(c_q) \ll S) + 0) * scale_\Delta)$. The superior bound may be computed similarly using $S = S_1$ and $O = O_1$

### Signaling of bound offsets

In order to adjust the QC correction for different regions to be corrected (e.g. slice, picture, ...), the bound offsets $o_{min}$ and $o_{max}$ can be signaled in the bitstream thanks to their integer parameters (i.e., $O_0$ and $S_0$ for $o_{min}$ and $O_1$ and $S_1$ for $o_{max}$).

For each integer bound offset $O_i$ (represented with $N_i$ bits), its value is mapped to an index *bound_offset_index* which is signaled in the bitstream. The index *bound_offset_index* may be a $N_i$-bit index. In this case, all the $2^{N_i}$ values of $O_i$ in the range [*start$_i$, start$_i$* + $2^{N_i}$ - 1] are allowed, and $O_i$ is obtained from the index as $O_i$ = *bound_offset_index* + *start$_i$*. Alternatively, the index *bound_offset_index* may be a $M_i$-bit index with $M_i$<$N_i$. In this case only a subset of $2^{M_i}$ values of $O_i$ are allowed, and $O_i$ is obtained from the index using a mapping function, e.g., a Lookup Table (LUT) or a linear mapping.

The values of the integer shift parameters $S_0$ and $S_1$ may be signaled in the bitstream or may be fixed values known to both the encoder and decoder.

**Signaling for enabling or disabling QC correction**

In the QC correction, a flag use_qc may be signaled per region (e.g., CTU, slice, picture, ...) to indicate if the QC correction must be applied to the corresponding region. Alternatively, the flag may be inferred and not signaled explicitly. For example, the QC correction may be performed only if the QP is above a threshold.

**Problem to be solved**

In the quantization constrained correction both bound offsets $o_{min}$ and $o_{max}$ (or the corresponding integer parameters $O_0$, $S_0$, $O_1$ and $S_1$) are generally needed to compute the inferior and superior correction bounds $b_{inf}$ and $b_{sup}$ which are used to apply a correction to the transform coefficient $c_f$. However, in some cases, it may be preferable to perform QC correction with a single bound offset e.g., to save signaling cost of one of the bound offsets.

In the existing QC correction, it is possible to use only a single correction bound (i.e., either $b_{inf}$ or $b_{sup}$) e.g., by applying a one-sided correction function such as $\widehat{c_f} = \max(c_f, b_{inf})$ if only $b_{inf}$ is used, or $\widehat{c_f} = \min(c_f, b_{sup})$ if only $b_{sup}$ is used. However, given a single bound offset (i.e., either $o_{min}$ or $o_{max}$) or its corresponding integer parameters, it is not known in advance which correction bounds can be obtained, due to the symmetry property of quantization bounds illustrated in Figure 2. The type of correction bound that can be computed (i.e., inferior or superior) depends on the quantization level $c_q$ associated to each transform coefficient to be corrected. Depending on which bound offset is enabled and on whether $c_q < 0$, $c_q = 0$, or $c_q > 0$, it may be possible to compute only the superior correction bound, only the inferior correction bound, both correction bounds or none of them. Hence, the correction function should also depend on the transform coefficient to be corrected.

The present embodiments describe how to perform the QC correction of a given transform coefficient $c_f$ associated to a quantization level $c_q$ when the minimum and maximum bound offsets may be individually enabled or disabled. Corresponding signaling methods are also described to save signaling cost of bound offset parameters if the corresponding bound offset is disabled.

The embodiments describe:

1) A general embodiment for performing QC correction of a transform coefficient using individually enabled or disabled bound offsets.
2) A method for selecting adaptively the correction function based on either a single correction bound (inferior or superior) or both the inferior and the superior correction bounds.
3) A method for enabling or disabling each correction bound based on the enabled or disabled bound offsets.
4) Adaptations of the signaling to take advantage of the QC correction with individually enabled or disabled bound offsets.
5) Another embodiment for computing both the minimum and the maximum bound offsets using a single bound offset signaled in the bitstream

**QC Correction from individually enabled or disabled bound offsets**

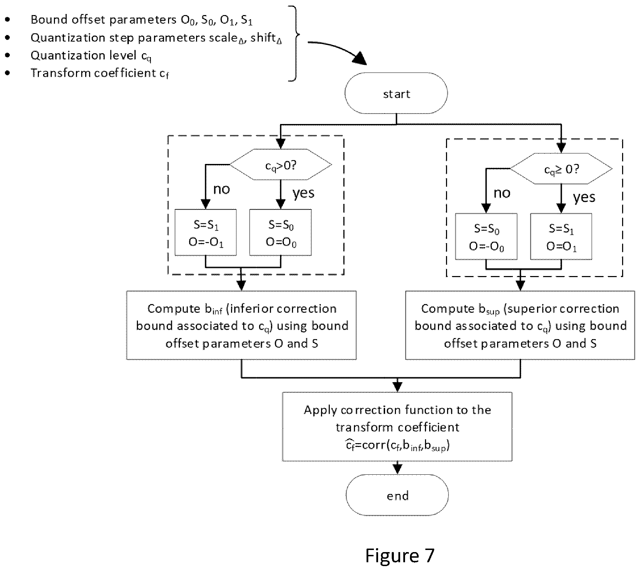

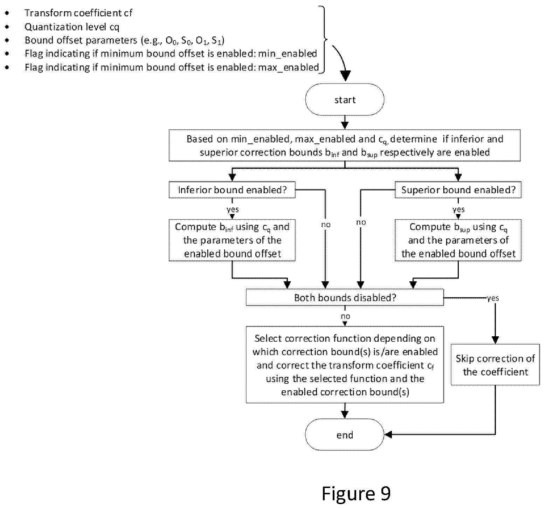

In an embodiment described in Figure 9, a coefficient $c_f$ associated with a quantization level $c_q$ is corrected based on bound offset parameters (e.g. minimum bound offset $o_{min}$ or its integer parameter $O_0$ and $S_0$, maximum bound offset $o_{max}$ or its integer parameters $O_1$ and $S_1$) and flags min_enabled and max_enabled indicating if respectively the minimum and maximum bound offsets are enabled. For example, a flag value of 1 may indicate that the bound offset is enabled, and a flag value of 0 may indicate that the bound offset is disabled. Based on the min_enabled and max_enabled flags, and the quantization level $c_q$, it is first determined if the inferior and the superior correction bounds are enabled (e.g., set values of flags inf_enabled and sup_enabled). If a correction bound is enabled, it is then computed using $c_q$ and the parameters of the enabled bound offsets, e.g., with Equation 3 or 4 (directly based on bound offset $o_{min}$ or $o_{max}$) or with an integer based computation as in Figure 7 or Figure 8 (using integer bound offset parameters $O_0$ and $S_0$ or $O_1$ and $S_1$). If any of the inferior or superior correction bounds is enabled, the transform coefficient $c_f$ is then corrected using a correction function selected depending on which correction bounds (i.e., inferior, superior or both) are enabled. Otherwise (e.g., inf_enabled=0 and sup_enabled=0), the correction of the coefficient is skipped (i.e., $\widehat{c_f} = c_f$ ).

In a variant, at the beginning of the process, the inferior correction bound is initialized to a large negative value (e.g. -2^16), the superior correction bound is initialized to a large positive value (e.g. 2^16), and the correction function remains the generic one where both the inferior and superior bounds are checked. In this variant, the correction function does not depend on the inf_enabled and sup_enabled flags.

**Selection of correction function**

If only the inferior correction bound $b_{inf}$ is enabled (e.g., inf_enabled=1 and sup_enabled=0), an inferior correction function is selected. The inferior correction function may be defined such that $\widehat{c_f} \geq b_{inf}$ . For example, this can be obtained by clipping values of $c_f$ that are below $b_{inf}$ as $\widehat{c_f} = \max(c_f, b_{inf})$ .

If only the superior correction bound $b_{sup}$ is enabled (e.g., inf_enabled=0 and sup_enabled=1), a superior correction function is selected. The superior correction function may be defined such that $\widehat{c_f} \leq b_{sup}$ . For example, this can be obtained by clipping values of $c_f$ that are above $b_{sup}$ as $\widehat{c_f} = \min(c_f, b_{sup})$ .

If both the inferior and the superior correction bounds $b_{inf}$ and $b_{sup}$ are enabled (e.g., inf_enabled=1 and sup_enabled=1), an inferior and superior correction function is selected. The inferior and superior correction function may be defined such that $b_{inf} \leq \widehat{c_f} \leq b_{sup}$ . For example, this can be obtained by clipping values of $c_f$ that are below $b_{inf}$ or above $b_{sup}$ as $\widehat{c_f} = \min(\max(c_f, b_{inf}), b_{sup})$ .

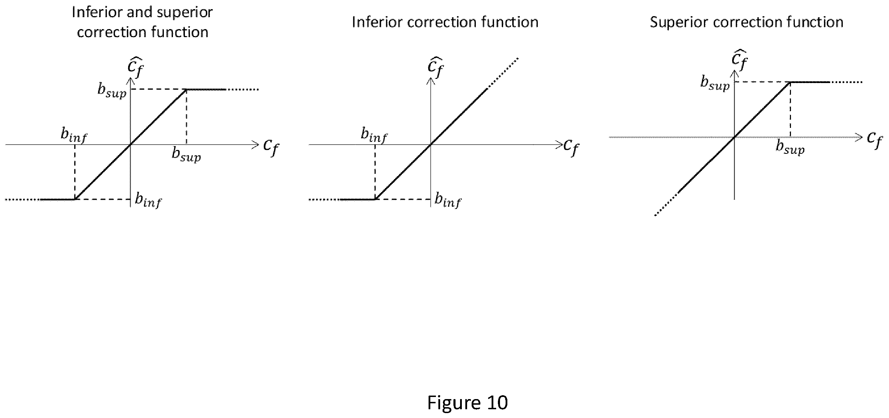

These clipping correction functions are illustrated in Figure 10.

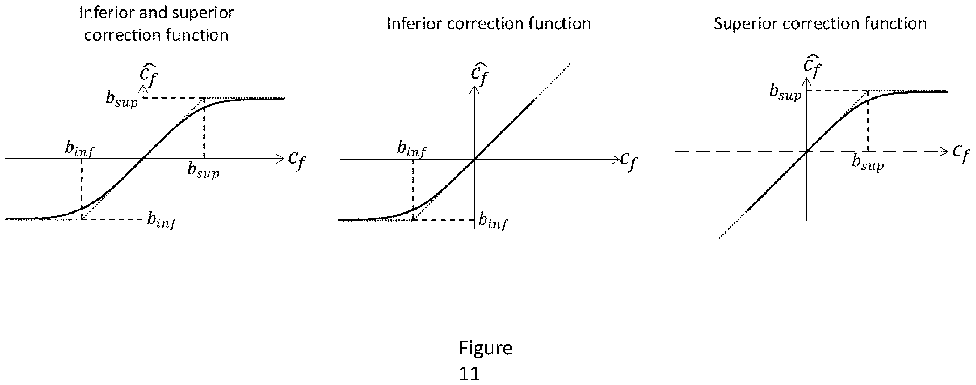

Note that other functions may be used. For example, a smooth clipping function as in Figure 6 may be used for the inferior and superior correction function. Similarly, a smooth inferior correction function and a smooth superior correction function may be used, as illustrated in Figure 11.

**Enabling or disabling of correction bound(s)**

**Enabling of correction bounds when corresponding bound offset is enabled**

Due to the symmetry property of quantization bounds illustrated in Figure 2, the type of correction bounds (i.e., inferior or superior) that can be computed from a single bound offset depends on the quantization level $c_q$ associated to the transform coefficient $c_f$ to be corrected.

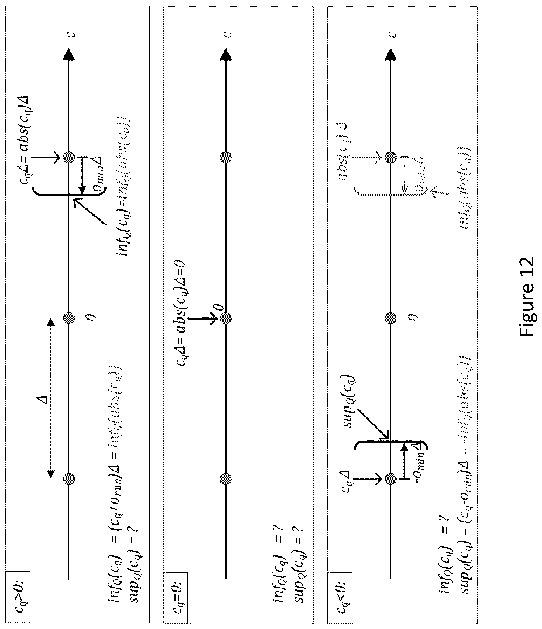

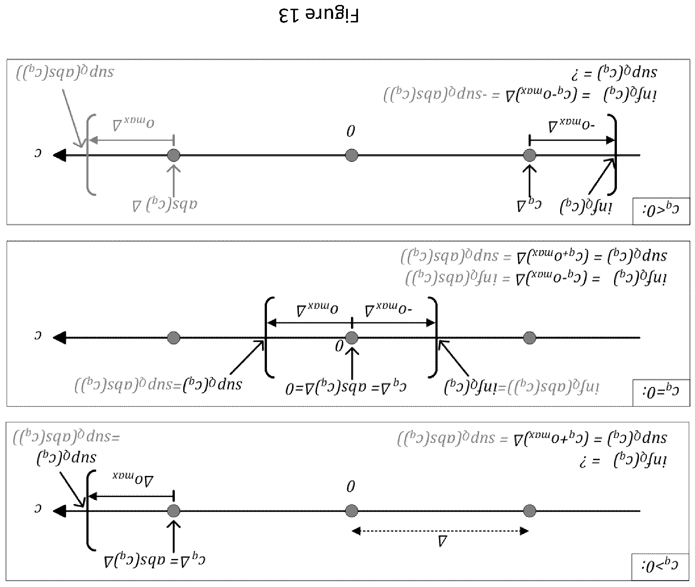

For each case $c_q > 0$, $c_q = 0$, or $c_q < 0$, the types of bound that depend on the minimum bound offset are illustrated in Figure 12. The bounds associated to the absolute value of the quantization level $abs(c_q)$ (needed for the case where QC correction is applied to a symmetrized coefficient) are also shown in gray. Similarly, the type of bounds that depend on the maximum offset are illustrated in Figure 13.

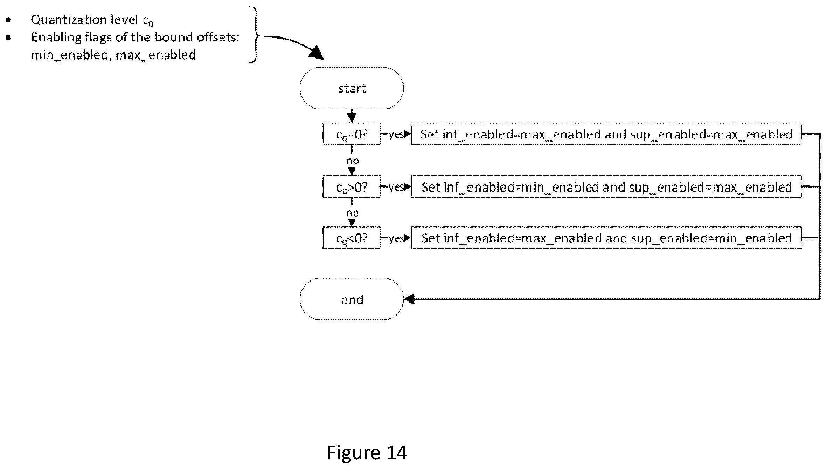

As a result, if a correction bound depends on a disabled bound offset, this correction bound should be also disabled. For example, this may be performed by determining the inf_enabled and sup_enabled flags of the correction bounds based on the quantization level $c_q$ and the enabling flags min_enabled and max_enabled of the bound offsets (1st step of Figure 9) as described in Figure 14.

If $c_q = 0$, both the inferior and superior correction bounds are disabled if the maximum offset is disabled (e.g., inf_enabled=sup_enabled=max_enabled).

If $c_q > 0$, the inferior correction bound is disabled if the minimum offset is disabled (e.g., inf_enabled=min_enabled). Similarly, the superior correction bound is disabled if the maximum offset is disabled (e.g., sup_enabled=max_enabled).

If $c_q < 0$, the inferior correction bound is disabled if the maximum offset is disabled (e.g., inf_enabled=max_enabled). Similarly, the superior correction bound is disabled if the minimum offset is disabled (e.g., sup_enabled=min_enabled).

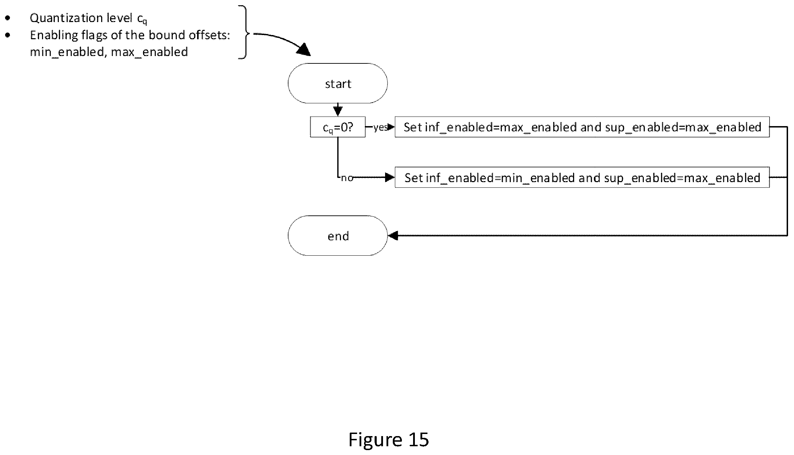

In the variant of the QC correction in Figure 8, the correction function is applied to a symmetrized transform coefficient $c_f^{sym}$ and the final corrected coefficient $\widehat{c_f}$ is obtained from the corrected symmetrized coefficient $\widehat{c_f^{sym}}$ . In this case, the correction bounds $b_{inf}$ and $b_{sup}$ used for correcting the symmetrized coefficient are computed based on the absolute value of the quantization level $abs(c_q)$ (instead of $c_q$) as shown in gray in Figure 12 and Figure 13. Hence, in this variant, the enabling flags inf_enabled and sup_enabled of the correction may be determined as described in Figure 15.

If $c_q = 0$, both the inferior and superior correction bounds are disabled if the maximum offset is disabled (e.g., inf_enabled=sup_enabled=max_enabled).

Otherwise ($c_q \neq 0$), the inferior correction bound is disabled if the minimum offset is disabled (e.g, inf_enabled=min_enabled). Similarly, the superior correction bound is disabled if the maximum offset is disabled (e.g., sup_enabled=max_enabled).

## Additional criteria for disabling correction bounds

In the examples of Figure 14 and Figure 15, a correction bound is only disabled if its corresponding bound offset is disabled. However, it is also possible to use additional criteria to disable a correction bound.

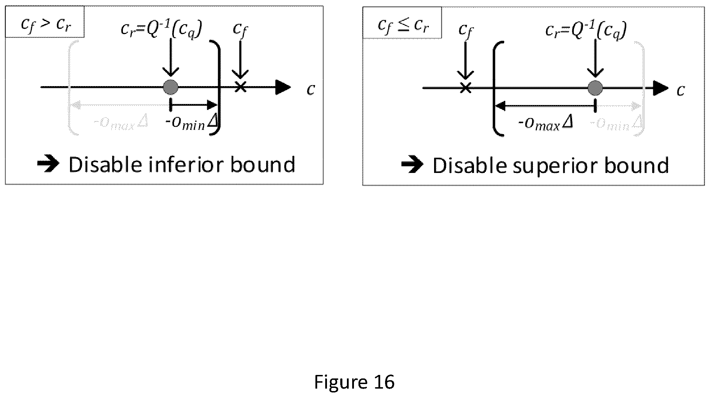

For example, one may force QC correction of a given transform coefficient to be performed with at most one correction bound by selecting which of the inferior or superior correction bound may be used and thus by disabling the other one. An example of selection is illustrated in Figure 16, based on the transform coefficient $c_f$ and the dequantized transform coefficient $c_r$ obtained by dequantization of the quantization level $c_q$ (i.e., $c_r = Q^{-1}(c_q)$). In this case, either the inferior correction bound is disabled if $c_f > c_r$, or the superior correction bound is disabled otherwise. In the variant of the QC correction in Figure 8 where the correction function is applied to a symmetrized transform coefficient $c_f^{sym}$, the same criterion may be defined based on $c_f^{sym}$ and a symmetrized dequantized transform coefficient $c_r^{sym}$ obtained by dequantization of the absolute value of quantization level, i.e., $c_r^{sym} = Q^{-1}\left(abs(c_q)\right)$. In this case, either the inferior correction bound is disabled if $c_f^{sym} > c_r^{sym}$ or the superior correction bound is disabled otherwise.

It may also be noted that even if a correction bound is not disabled according to this criterion, it may still be disabled for the QC correction if the corresponding bound offset is disabled.

In a variant, the disabling of one of the correction bounds illustrated in Figure 16 may be performed only if both the inferior correction bound $b_{inf}$ and the superior correction bound $b_{sup}$ are enabled according to other criteria (e.g., correction bound enabled if the corresponding bound offsets is enabled, as in Figure 14 or Figure 15).

In another variant, the disabling of one of the correction bounds illustrated in Figure 16 may be performed only if both the inferior correction bound $b_{inf}$ and the superior correction bound $b_{sup}$ are enabled according to other criteria, and are such that $b_{inf} > b_{sup}$. Note that it is possible to determine if $b_{inf} > b_{sup}$ without computing explicitly $b_{inf}$ and $b_{sup}$. For example, according to Equations 3 and 4, if the quantization level $c_q$ is equal to 0 and if $o_{max} < 0$, then it is known that $b_{inf} > b_{sup}$. Similarly, if the quantization level $c_q$ is not equal to 0 and $o_{max} < o_{min}$, then it is known that $b_{inf} > b_{sup}$.

In another example, both correction bounds may be disabled (i.e., QC correction may be disabled for the coefficient) if $c_q$ is equal to 0 and if $o_{max} < 0$.

In another example, both correction bounds may be disabled (i.e., QC correction may be disabled for the coefficient) if $c_q$ is not equal to 0 and if $o_{max} < o_{min}$.

## Early skipping of QC correction for a coefficient

Note that the condition for skipping QC correction in Figure 9 (i.e., if both correction bounds are disabled) may be directly evaluated using the quantization level $c_q$ and the flags min_enabled and max_enabled without explicitly determining if each correction bound is enabled.

For example, for both methods in Figure 14 and Figure 15, one may directly determine that both correction bounds are disabled (and thus skip QC correction of the coefficient) if "max_enabled=0 and (min_enabled=0 or $c_q$=0)".

If the additional criterion in Figure 16 is used for disabling a correction bound, then one may directly determine that both correction bounds are disabled if "(max_enabled=0 and ($c_f > c_r$ or $c_q$=0)) or (min_enabled=0 and $c_f \leq c_r$ and $c_q \neq 0$)".

## Signaling or enabling or disabling bound offsets

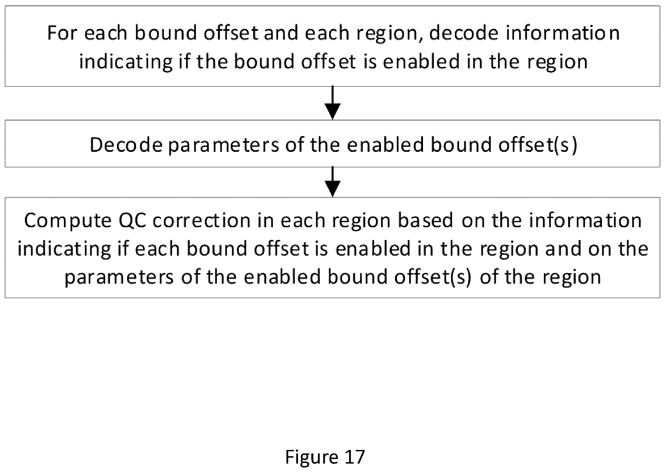

Enabling or disabling each bound offset individually makes it possible to perform QC correction even if a single bound offset is available. Hence, in an embodiment described in Figure 17, the signaling of bound offset parameters in a bitstream is adapted to take advantage of the QC correction method based on individually enabled or disabled bound offsets.

For each region (e.g., CTU, slice, picture,...), a decoder decodes information indicating if the bound offset is enabled in the region. If a bound offset is enabled, the corresponding bound offset parameters (e.g., integer bound offset

parameter $O_i$, integer shift parameter $S_i$) are then decoded. Finally, the QC correction is performed if at least one bound offset is enabled in the region, based on the information indicating if each bound offset is enabled in the region and on the parameters of the enabled bound offset(s) of the region.

**Enabling or disabling flags**

In a first example, the information indicating if the bound offset is enabled is a flag signaled in the bitstream. For example, a flag min_enabled may be directly signaled in the bitstream to indicate if the minimum bound offset is enabled, and a flag max_enabled may be directly signaled in the bitstream to indicate if the maximum bound offset is enabled.

In a variant, only the max_enabled flag is signaled, and the min_enabled flag is always set to the same value (e.g., always enabled). Inversely, in another variant, only the min_enabled flag is signaled, and the min_enabled flag is always set to the same value.

**Disabling using a specific value of the bound offset index**

In a second example, a specific value of the *bound_offset_index* used in the signaling of an integer bound offset parameter (e.g., $O_0$ or $O_1$) is reserved to indicate that the corresponding bound offset is disabled. For example, if a $N_i$-bit integer bound offset $O_i$ is signaled with $N_i$ bits, the corresponding *bound_offset_index* can take values in the range [0, $2^{N_i}$-1]. Hence, a value in this range (e.g., 0 or $2^{N_i}$-1) may be used to indicate that the bound offset is disabled. Similarly, if a reduced bitdepth $M_i$ (with $M_i < N_i$) is used for the signaling of $O_i$, a value in the range [0,$2^{M_i}$-1] (e.g., the value 0 or $2^{M_i}$-1) may be used to indicate that the bound offset is disabled.

This method avoids the signaling cost of a flag max_enabled or min_enabled (i.e., 1 bit) when the corresponding bound offset is enabled. However, it has a higher signaling cost than the direct signaling of the flag max_enabled or min_enabled when the bound offset is disabled (i.e., $N_i$ or $M_i$ bits instead of 1 bit). Hence, this method may be advantageous compared to the direct signaling of the flags max_enabled or min_enabled, only in situations where the bound offset is likely to be enabled. In practice, the likelihood of enabling a bound offset may depend on the type of bound offset (e.g., higher image quality may be obtained with QC correction only with a minimum bound offset than only with a maximum bound offset). Hence, this method may be used for enabling or disabling one of the bound offsets, and the signaling of a flag (max_enabled or min_enabled) may be used for the other bound offset.

**Interaction with existing QC disabling mechanism**

The QC correction may be disabled in a region (e.g., CTU, slice, picture, ...) with the signaling of a flag use_qc. Hence, if QC correction is disabled in a region, the signaling of bound offset information (e.g., enabling flags max_enabled and min_enabled, bound offset parameters) should be skipped for that region.

Inversely, if QC correction is enabled in a region, one may infer that at least one of the bound offsets is enabled. Hence, in a variant of the method in Figure 17, the decoder first decodes information indicating if the minimum bound offset is enabled. Then, if the minimum bound offset is disabled, the decoder infers that the maximum bound offset is enabled. Otherwise, the decoder decodes information indicating if the maximum bound offset is enabled.

In a similar variant, the decoder first decodes information indicating if the maximum bound offset is enabled. Then, if the maximum bound offset is disabled, the decoder infers that the minimum bound offset is enabled. Otherwise, the decoder decodes information indicating if the minimum bound offset is enabled.

**Encoder decision for enabling or disabling**

On the encoder side, the decision to either enable or disable a bound offset may be performed based on a rate distortion criterion, where a rate-distortion cost of a given mode may be obtained as:

$$rd\_cost = R + \lambda * D$$

where R is the rate of the mode (e.g. number of bits that need to be signaled in the bitstream), D is the distortion (e.g. sum of squared errors (SSE) between the original and the reconstructed image) and $\lambda$ is a Lagrangian parameter.

For example, for the minimum bound offset in a given region, two rate-distortion costs may be computed either without performing QC correction or by performing QC correction with the minimum bound offset enabled and the maximum bound offset disabled (e.g., the smallest rate-distortion cost of QC correction obtained with each allowed value of the integer bound offset $O_0$ may be used). If the rate distortion cost without QC correction is smaller, the minimum bound offset is disabled in the region, otherwise it is enabled.

Similarly, for the maximum bound offset in a given region, two rate-distortion costs may be computed either without performing QC correction or by performing QC correction with the maximum bound offset enabled and the minimum bound offset disabled (e.g., the smallest rate-distortion cost of QC correction obtained with each allowed value of the integer bound offset $O_1$ may be used). If the rate-distortion cost without QC correction is smaller, the maximum bound offset is disabled in the region, otherwise it is enabled.

If all the bound offsets are disabled for the same region, the encoder may only signal in the bitstream a value of the flag use_qc indicating that QC correction is disabled without signaling further information of individual bound offsets for that region. Otherwise, the value of the flag use_qc signaled in the bitstream is set to a value indicating that QC correction is enabled. Information of each bound offset is finally signaled in the bitstream (i.e., information indicating if a bound offset is enabled, and parameters of the enabled bound offset(s)).

In order to reduce the computational complexity when computing the distortions with QC correction either with only the minimum bound offset enabled or with only the maximum bound offset enabled, a transform domain computation of the distortion may be performed. For example, for each block, the original transform coefficients c may be obtained by applying the transform to the difference between the original image block and the prediction block. The SSE is then computed between the corrected transform coefficients $c_f$ and the original transform coefficients $c$. Using this method, the distortions with QC correction are thus obtained without the need to fully reconstruct the QC corrected blocks from the corrected transform coefficients.

## Computation of both bound offsets from a single bound offset

In another embodiment, the QC correction is performed by signaling a single bound offset $o$ and by computing both the minimum and maximum bound offset using the single bound offset $o$. For example, the minimum and maximum bound offset $o_{min}$ and $o_{max}$ may be obtained as $o_{min}$ = -$o$ and $o_{max}$ = $o$ (or alternatively as $o_{min}$ = $o$ and $o_{max}$ = -$o$). In another example, the bound offset $o$ corresponds to the parameter $a$ in Equation 2. In this case, the minimum and maximum bound offsets are obtained as $o_{min}$ = -$o$ and $o_{max}$ = 1 - $o$.

In this embodiment, the single bound offset $o$ may be constrained to take a positive value in order to have $o_{min}$ < $o_{max}$. For example, in the integer representation of $o$ as $o = O/2^S$, with an integer shift parameter S and a N-bit integer bound offset parameter $O$ in the range [*start, start* + $2^N$ - 1], the integer bound offset parameter $O$ may be constrained to take positive values by using the starting value *start* = 0. In this case, the integer bound offset parameter $O$ may be directly signaled in the bitstream (i.e., the *bound_offset_index* signaled in the bitstream is equal to $O$).

Note that this embodiment may be used along with the process described in Figure 9 to enable or disable the minimum and maximum bound offsets individually. In this case, the minimum bound offset $o_{min}$ may be computed from the bound offset $o$ only if min_enabled=1. Similarly, the maximum bound offset $o_{min}$ may be computed from the bound offset $o$ only if max_enabled=1. Additionally, if both bound offsets are disabled (i.e., min_enabled=0 and max_enabled=0) or equivalently if the QC correction is disabled (i.e., use_qc=0), the signaling of the bound offset $o$ may be skipped.

In a variant, the minimum and maximum bound offsets are computed from a single bound offset $o$ signaled in the bitstream only if both bound offsets are enabled (i.e., min_enabled=1 and max_enabled=1). Otherwise, the minimum bound offset $o_{min}$ is signaled if it is enabled (i.e., if min_enabled=1) or the maximum bound offset $o_{max}$ is signaled if it is enabled (i.e., if max_enabled=1).

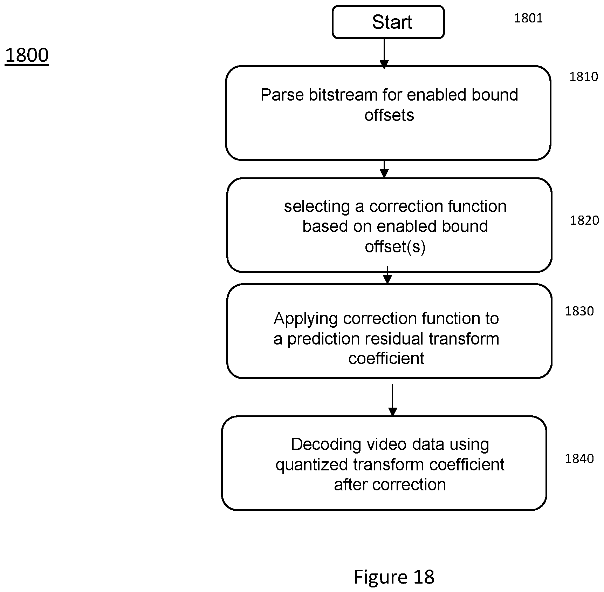

One embodiment of a method 1800 under the general aspects described here is shown in Figure 18. The method commences at start block 1801 and control proceeds to block 1810 for parsing a bitstream for enabled bound offsets. Control proceeds from block 1810 to block 1820 for selecting a correction function based on at least one enabled bound offset. Control proceeds from block 1820 to block 1830 for applying the correction function to a prediction residual transform coefficient. Control proceeds from block 1830 to block 1840 for decoding video data using the quantized transform coefficient after correction.

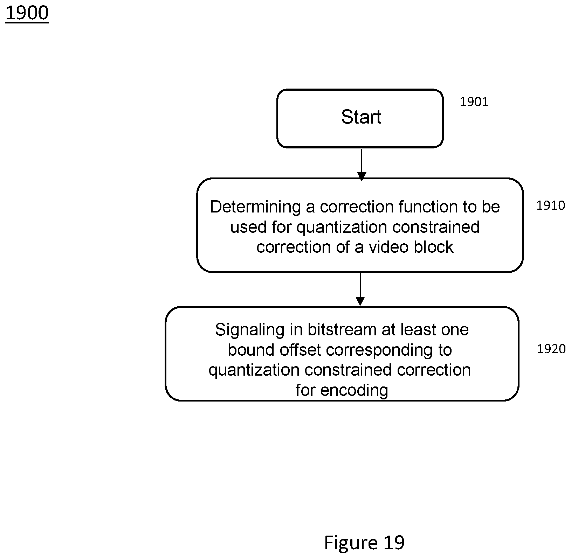

One embodiment of a method 1900 under the general aspects described here is shown in Figure 19. The method commences at start block 1901 and control proceeds to block 1910 for determining a correction function to be used for quantization constrained correction of a video block based on at least one enabled bound offset. Control proceeds from block 1910 to block 1920 for signaling in a bitstream at least one bound offset corresponding to the quantization constrained correction for encoding the video block.

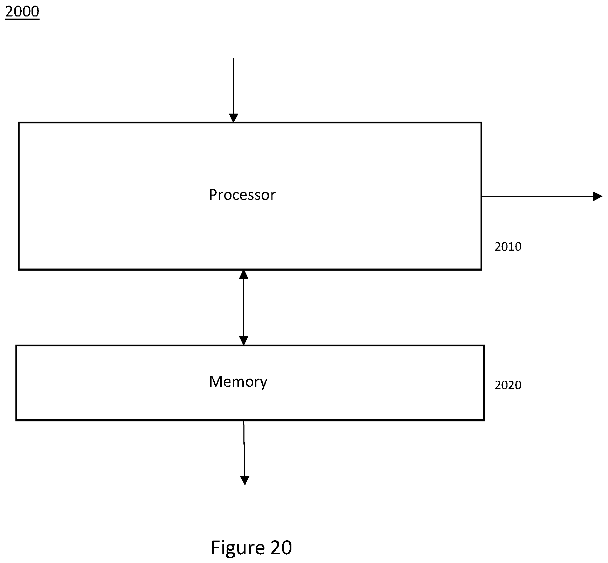

Figure 20 shows one embodiment of an apparatus 2000 for encoding, decoding, compressing or decompressing, or filtering of video data using the aforementioned methods. The apparatus comprises Processor 2010 and can be interconnected to a memory 2020 through at least one port. Both Processor 2010 and memory 2020 can also have one or more additional interconnections to external connections.

Processor 2010 is also configured to either insert or receive information in a bitstream and, either compressing, encoding, decoding, or quantizing using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description and does not limit the application or scope of those aspects. Indeed, all of the different aspects can be combined and interchanged to provide further aspects. Moreover, the aspects can be combined and interchanged with aspects described in earlier filings as well.

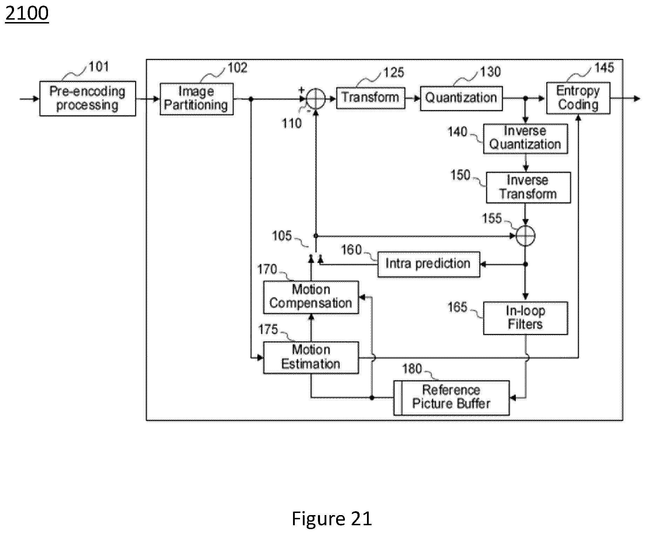

The aspects described and contemplated in this application can be implemented in many different forms. Figures 21, 22, and 23 provide some embodiments, but other embodiments are contemplated and the discussion of Figures 21, 22, and 23 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

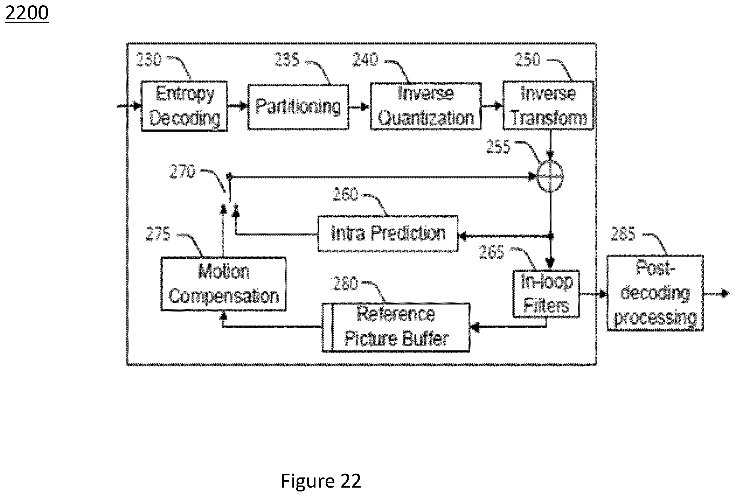

Various methods and other aspects described in this application can be used to modify modules, for example, the intra prediction, entropy coding, and/or decoding modules (160, 260, 145, 230), of a video encoder 100 and decoder 200 as shown in Figure 21 and Figure 22. Moreover, the present aspects are not limited to VVC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application. The specific values are for example purposes and the aspects described are not limited to these specific values.

Figure 21 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 22 illustrates a block diagram of a video decoder 200. In the decoder 200, a bitstream is decoded by the decoder elements as described below. Video decoder 200 generally performs a decoding pass reciprocal to the encoding pass as described in Figure 21. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image.

The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

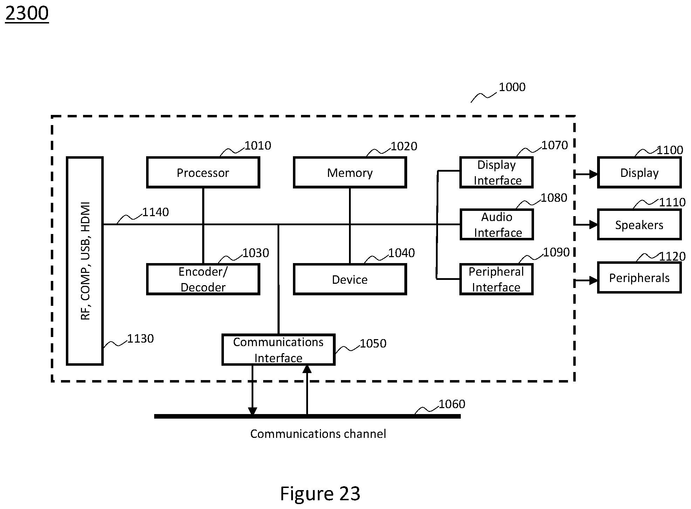

Figure 23 illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 23, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or another device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types: At least one embodiment comprises performing an analysis of block vectors neighboring a current video block and determining a prediction by blending predictions of at least two predictors using weights based on said analysis.

At least one embodiment comprises the above embodiment and further comprising encoding or decoding the video block using the determined prediction.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

**Claims**

1. A method, comprising:

   parsing a bitstream for enabled bound offsets;
   selecting a correction function based on at least one enabled bound offset;
   applying the correction function to a prediction residual transform coefficient; and,
   decoding video data using the prediction residual transform coefficient after correction.

2. An apparatus, comprising a memory and a processor configured for:

   parsing a bitstream for enabled bound offsets;
   selecting a correction function based on at least one enabled bound offset;
   applying the correction function to a prediction residual transform coefficient; and,
   decoding video data using the prediction residual transform coefficient after correction.

3. A method, comprising:

   determining a correction function to be used for quantization constrained correction of a video block based on at least one enabled bound offset; and,
   signaling in a bitstream at least one bound offset corresponding to the quantization constrained correction for encoding the video block.

4. An apparatus, comprising a memory and a processor configured for:

   determining a correction function to be used for quantization constrained correction of a video block based on at least one enabled bound offset; and,
   signaling in a bitstream at least one bound offset corresponding to the quantization constrained correction for encoding the video block.

5. The method of any one of Claims 1 or 3, or the apparatus of any one of Claims 2 or 4, wherein each correction bound is enabled or disabled based on the enabled or disabled bound offsets.

6. The method of Claim 1, or the apparatus of Claim 2, wherein minimum and maximum bound offsets are determined based on a single bound offset signaled in the bistream.

7. The method of Claim 1, or the apparatus of Claim 2, wherein the selection of the correction function is performed based on individually enabled or disabled bound offsets.

8. The method of Claim 1, or the apparatus of Claim 2, wherein the correction function for an inferior or superior correction function is performed based on the corresponding enable signal in the bitstream.

9. The method of any one of claims 1 through 8, or the apparatus of any one of claims 1 through 8, wherein additional criteria is used to disable a correction bound.

10. A device comprising:

an apparatus according to Claim 2; and
at least one of (i) an antenna configured to receive a signal, the signal including the video signal, (ii) a band limiter configured to limit the received signal to a band of frequencies that includes the video block, and (iii) a display configured to display an output representative of the video block.

11. A non-transitory computer readable medium containing data content generated according to the method of any one of claims 3, or 5 through 9, or by the apparatus of any one of claims 4, or 5 through 9, for playback using a processor.

12. A signal comprising video data generated according to the method of any one of claims 3, or 5 through 9, or by the apparatus of any one of claims 4, or 5 through 9, for playback using a processor.

13. A non-transitory computer program product comprising instructions which, when the program is executed by a computer, cause the computer to carry out the method of any one of claims 3 or 5 through 9.

Figure 1

Figure 2

Figure 3

QP

$[c_q]$

$X_f$ $\xrightarrow{+}$ $\bigoplus$ $\xrightarrow{}$ $\boxed{T}$ $\xrightarrow{[c_f]}$ $\boxed{proj_{[Q(.)=c_q]}}$ $\xrightarrow{[\hat{c}_f]}$ $\boxed{T^{-1}}$ $\xrightarrow{+}$ $\bigoplus$ $\xrightarrow{}$ $X_{QCF}$

$pred$

Figure 4

Figure 5

Figure 6

- Bound offset parameters $O_0$, $S_0$, $O_1$, $S_1$
- Quantization step parameters $scale_\Delta$, $shift_\Delta$
- Quantization level $c_q$
- Transform coefficient $c_f$

start

$c_q > 0$?

no → $S = S_1$ $O = -O_1$

yes → $S = S_0$ $O = O_0$

Compute $b_{inf}$ (inferior correction bound associated to $c_q$) using bound offset parameters O and S

$c_q \geq 0$?

no → $S = S_0$ $O = -O_0$

yes → $S = S_1$ $O = O_1$

Compute $b_{sup}$ (superior correction bound associated to $c_q$) using bound offset parameters O and S

Apply correction function to the transform coefficient
$\widehat{c_f} = corr(c_f, b_{inf}, b_{sup})$

end

Figure 7

Figure 8

- Transform coefficient cf
- Quantization level cq
- Bound offset parameters (e.g., $O_0$, $S_0$, $O_1$, $S_1$)
- Flag indicating if minimum bound offset is enabled: min_enabled
- Flag indicating if minimum bound offset is enabled: max_enabled

```
start
```

Based on min_enabled, max_enabled and $c_q$, determine if inferior and superior correction bounds $b_{inf}$ and $b_{sup}$ respectively are enabled

Inferior bound enabled?

yes

Compute $b_{inf}$ using $c_q$ and the parameters of the enabled bound offset

no

no

Superior bound enabled?

yes

Compute $b_{sup}$ using $c_q$ and the parameters of the enabled bound offset

Both bounds disabled?

yes

no

Select correction function depending on which correction bound(s) is/are enabled and correct the transform coefficient $c_f$ using the selected function and the enabled correction bound(s)

Skip correction of the coefficient

```
end
```

Figure 9

Inferior and superior
correction function

Inferior correction function

Superior correction function

Figure 10

Inferior and superior
correction function

$\widehat{c_f}$

$b_{sup}$

$b_{inf}$

$b_{sup}$

$b_{inf}$

$c_f$

Inferior correction function

$\widehat{c_f}$

$b_{inf}$

$b_{inf}$

$c_f$

Superior correction function

$\widehat{c_f}$

$b_{sup}$

$b_{sup}$

$c_f$

Figure
11

Figure 12

Figure 13

- Quantization level $c_q$
- Enabling flags of the bound offsets: min_enabled, max_enabled

start

$c_q=0$? —yes→ Set inf_enabled=max_enabled and sup_enabled=max_enabled

no

$c_q>0$? —yes→ Set inf_enabled=min_enabled and sup_enabled=max_enabled

no

$c_q<0$? —yes→ Set inf_enabled=max_enabled and sup_enabled=min_enabled

end

Figure 14

- Quantization level $c_q$
- Enabling flags of the bound offsets: min_enabled, max_enabled

start

$c_q=0?$ —yes→ Set inf_enabled=max_enabled and sup_enabled=max_enabled

no→ Set inf_enabled=min_enabled and sup_enabled=max_enabled

end

Figure 15

Figure 16

For each bound offset and each region, decode information
indicating if the bound offset is enabled in the region

↓

Decode parameters of the enabled bound offset(s)

↓

Compute QC correction in each region based on the information
indicating if each bound offset is enabled in the region and on the
parameters of the enabled bound offset(s) of the region

Figure 17

1800

Start    1801

Parse bitstream for enabled bound
offsets    1810

selecting a correction function
based on enabled bound
offset(s)    1820

Applying correction function to
a prediction residual transform
coefficient    1830

Decoding video data using
quantized transform coefficient
after correction    1840

Figure 18

EP 4 753 257 A1

1900

Start — 1901

Determining a correction function to be used for quantization constrained correction of a video block — 1910

Signaling in bitstream at least one bound offset corresponding to quantization constrained correction for encoding — 1920

Figure 19

2000

```
              ┌──────────────────────────────────┐
              │                                  │────────────▶
              │            Processor             │
              │                                  │   2010
              └──────────────────────────────────┘
                            ▲
                            │
                            ▼
              ┌──────────────────────────────────┐
              │             Memory               │   2020
              └──────────────────────────────────┘
                            │
                            ▼
```

Figure 20

Figure 21

2200

Figure 22

Figure 23

Europäisches
Patentamt
European
Patent Office
Office européen
des brevets

# EUROPEAN SEARCH REPORT

**Application Number**

EP 24 30 6978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 334 078 A1 (PANASONIC CORP [JP]) 15 June 2011 (2011-06-15) | 1-7, 10-13 | INV. H04N19/124 |
| Y | * paragraphs [0019] - [0024], [0035] - [0036], [0039] - [0053], [0055] - [0092] * * figures 3, 5-6,7A-B, 8-10 * | 8,9 | H04N19/70 H04N19/18 |
| Y | WO 2008/057308 A2 (THOMSON LICENSING [FR]; KAO MENG-PING [US] ET AL.) 15 May 2008 (2008-05-15) * page 19, lines 13-26 * * page 20, line 22 - page 24, line 8 * * figures 3-4, 8-9 * | 8,9 | |
| A | WO 2024/200011 A1 (INTERDIGITAL CE PATENT HOLDINGS SAS [FR]) 3 October 2024 (2024-10-03) * page 11, line 22 - page 19, line 12 * * figures 4-9 * | 1-13 | |

**TECHNICAL FIELDS SEARCHED (IPC)**

H04N

The present search report has been drawn up for all claims

| Place of search | Date of completion of the search | Examiner |
|---|---|---|
| The Hague | 25 April 2025 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6978

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2025

| Patent document cited in search report | | Publication date | Patent family member(s) | | Publication date |
|---|---|---|---|---|---|
| EP 2334078 | A1 | 15-06-2011 | EP | 2334078 A1 | 15-06-2011 |
| | | | WO | 2011072823 A1 | 23-06-2011 |
| WO 2008057308 | A2 | 15-05-2008 | BR | PI0717936 A2 | 03-12-2013 |
| | | | CN | 101543076 A | 23-09-2009 |
| | | | CN | 104902278 A | 09-09-2015 |
| | | | CN | 105357527 A | 24-02-2016 |
| | | | CN | 105357528 A | 24-02-2016 |
| | | | CN | 105357529 A | 24-02-2016 |
| | | | CN | 105376567 A | 02-03-2016 |
| | | | CN | 105376572 A | 02-03-2016 |
| | | | CN | 105376573 A | 02-03-2016 |
| | | | CN | 105376574 A | 02-03-2016 |
| | | | CN | 105392003 A | 09-03-2016 |
| | | | CN | 105392004 A | 09-03-2016 |
| | | | CN | 105392005 A | 09-03-2016 |
| | | | CN | 105392006 A | 09-03-2016 |
| | | | CN | 105392007 A | 09-03-2016 |
| | | | CN | 105407355 A | 16-03-2016 |
| | | | CN | 105430398 A | 23-03-2016 |
| | | | CN | 105430399 A | 23-03-2016 |
| | | | EP | 2082583 A2 | 29-07-2009 |
| | | | EP | 4224853 A1 | 09-08-2023 |
| | | | HK | 1214706 A1 | 29-07-2016 |
| | | | HK | 1222076 A1 | 16-06-2017 |
| | | | HK | 1222077 A1 | 16-06-2017 |
| | | | HK | 1222494 A1 | 30-06-2017 |
| | | | JP | 5801032 B2 | 28-10-2015 |
| | | | JP | 2010509842 A | 25-03-2010 |
| | | | US | 2009257664 A1 | 15-10-2009 |
| | | | US | 2016112725 A1 | 21-04-2016 |
| | | | US | 2017238021 A1 | 17-08-2017 |
| | | | US | 2021337241 A1 | 28-10-2021 |
| | | | US | 2024244270 A1 | 18-07-2024 |
| | | | WO | 2008057308 A2 | 15-05-2008 |
| WO 2024200011 | A1 | 03-10-2024 | NONE | | |

EPO FORM P0459

For more details about this annex : see Official Journal of the European Patent Office, No. 12/82